(19) Europäisches Patentamt

European Patent Office

Office européen des brevets

(11) **EP 2 278 382 A1**

(12) **EUROPEAN PATENT APPLICATION**

(43) Date of publication:
**26.01.2011 Bulletin 2011/04**

(51) Int Cl.:
***G02B 27/01*** *(2006.01)*

(21) Application number: **09165913.6**

(22) Date of filing: **20.07.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Delphi Technologies, Inc.
Troy, Michigan 48007 (US)**

(72) Inventors:
  • **Moussa, Hassan
    67400 Illkirch (FR)**

  • **Geyl, Laurent
    67100 Strasbourg (FR)**

(74) Representative: **Robert, Vincent et al
    Delphi European Headquarters
    64, Avenue de la Plaine de France
    Paris Nord II
    BP 65059 Tremblay-en-France
    95972 Roissy Charles de Gaulle Cedex (FR)**

(54)    **A head-up display system including a coherence increasing device**

(57)    It is proposed a head-up display system (16) for use in a vehicle (10) comprising a light source unit (22) and a display (24) generating images to be projected in the field of vision of a user through an optical system (26), the optical system (26) including a diffractive combiner (28) incorporating computer generated holograms, wherein the light source unit (22) and the display (24) are driven by an electronic control circuit (30), **characterized in that** the light source unit (22) comprises successively, in the direction of the light beam (LB), a non coherent light generator (32), a coherence increasing device (34), and a beam shaping device (36) distributing the light coming from the coherence increasing device (34) on the rear side (38) of the display (24).

**Fig. 2**

EP 2 278 382 A1

## Description

TECHNICAL FIELD

The present invention relates to a head-up display system, particularly for use in a vehicle.

BACKGROUND OF THE INVENTION

Diffractive head up display systems use coherent type light source in order to backlight a display, and then to project through a diffractive combiner a virtual image at a specified distance in front of the vehicle. The usage of diffractive technology in this kind of application implies a necessity to have an adapted projection unit able to interact correctly with the diffractive combiner especially concerning the image quality.

The head-up display system comprises a light source unit and a projection optical system, the light source unit including an electronic control circuit and a light transmissive display generating images to be projected in the field of vision of a user through the projection optical system. Such an example of head-up display is disclosed in document EP1862841 in the name of the applicant.

To allow the diffractive combiner to see the image at the output of the projection optical system, the light used in the generation of the image must be temporally and spatially coherent. Coherent light sources generally used in this kind of applications are laser type sources. Laser type sources present some limitations. Firstly, the usage of laser type sources must fulfill laser safety usage standards in order not to cause damages to the eyes of the driver. Secondly, laser sources require very precise thermal and electronic control in order that its luminosity characteristics stay stable over a wide enough temperature interval.

SUMMARY OF THE INVENTION

To solve the above mentioned problems, it is proposed to replace the coherent light source with a coherent increasing system associated to a non-coherent light source. For this purpose, the present invention proposes a head-up display system for use in a vehicle comprising a light source unit and a display generating images to be projected in the field of vision of a user through an optical system, the optical system including a diffractive combiner, wherein the light source unit and the display are driven by an electronic control circuit, **characterized in that** the light source unit comprises successively, in the direction of the light beam, a non coherent light generator, a coherence increasing device, and a beam shaping device distributing the light coming from the coherence increasing device on the rear side of the display.

The usage of non coherent light sources such as LED enables to have a wide functionning temperature interval with more stable thermal behavior. Also it allows cost reduction on head-up display systems.

According to other features of the present invention:

- the coherence increasing device comprises a band pass filtering layer;
- the coherence increasing device comprises a collimating device;
- the collimating device comprises uniformization elements for example Fresnel lenses;
- the coherence increasing device comprises a diaphragm which is facing the rear side of the beam shaping device;
- the non coherent light generator comprises a plurality of light sources and the coherence increasing device comprises a light homogenization device that enables to homogenize the contribution of said plurality of light sources;
- the light homogenization device comprises a parabolic reflector;
- the light sources are switched on sequentially by the control circuit, at a frequency essentially higher than the sensitivity of the human eye, such that the averaging of the luminous intensity coming from the plurality of light sources prevents the generation of speckle phenomenon in the virtual image;
- the light sources forming part of the non-coherent light generator are constituted of light emitting diodes, each diode emitting non-coherent light.;
- said band pass filtering layer is made of a coating deposited on each diode or can be integrated separately as a discrete filtering element;

BRIEF DESCRIPTION OF THE DRAWINGS

The present invention is now described by way of example with reference to the accompanying drawings in which:

- figure 1 is a schematic view showing a vehicle equipped with a head-up display system;
- figure 2 is a bloc diagram view showing a head-up display including a light source unit according to the present invention;
- figure 3 is a schematic view showing the non coherent light generator and the coherence increasing device forming part of the light source unit of figure 2 according to a first embodiment of the present invention;
- figure 4 is a diagram showing the output light power produced by a light emitting diode as a function of the wavelength;
- figure 5 is a diagram showing the control strategy for the diodes of the non coherent light generator of figure 3 in order to prevent the generation of speckle phenomenon;
- figure 6 is a schematic view showing a collimating and beam uniformization device as part of the coherent increasing device-according to a second embodiment of the present invention.

DESCRIPTION OF THE PREFERRED EMBODIMENTS

In the following description, similar elements could be designated with the same reference numbers.

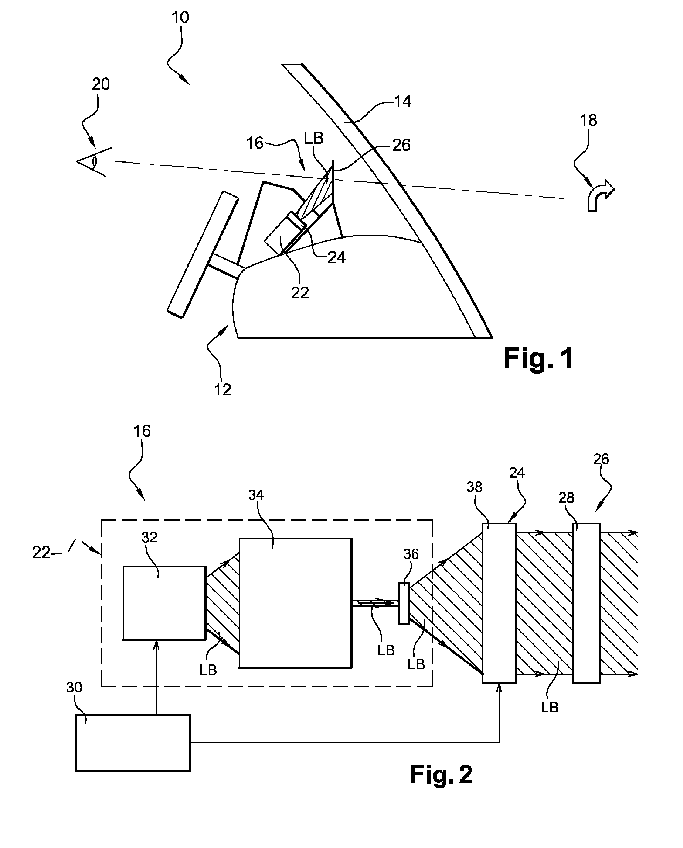

Figure 1 shows a vehicle 10 comprising a dashboard 12 behind a windscreen 14 and comprising a head-up display system 16 arranged on the dashboard 12 such that a virtual image 18 generated by the head-up display system 16 could be seen by the driver 20 of the vehicle as if the image was located in front of the vehicle 10, in the field of vision of the driver 20.

Of course, the head-up display system 16 could be arranged differently, for example on the roof of the vehicle 10.

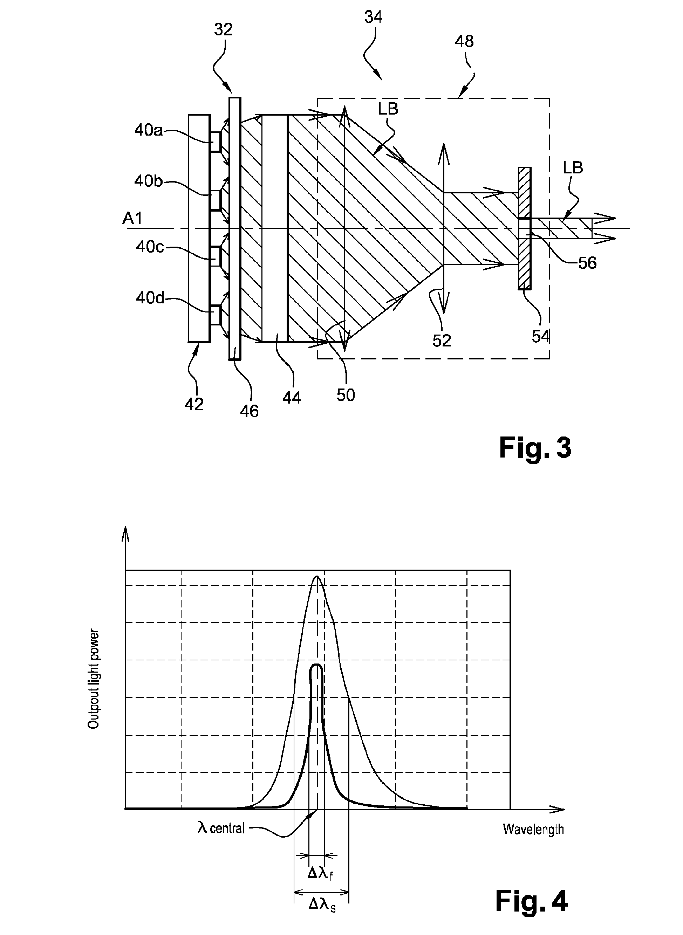

A first embodiment of the head-up display system 16 according to the invention is shown more in details on figures 2 and 3. It comprises a light source unit 22 generating a light beam LB and a display 24 generating images to be projected, thanks to the light beam LB, as virtual images 18 in the field of vision of the driver through an optical system 26. The display 24 is constituted for example by a Liquid Crystal Display.

The optical system 26 includes a diffractive combiner 28. An example of such a diffractive combiner is disclosed for example in document EP1862841 incorporated herewith by reference.

The combiner 28 can achieve different optical functions such as enlargement of image size, positioning of the virtual image 18 in the real scene by respecting the driver's eye ellipse.

The light source unit 22 and the display 24 are driven by an electronic control circuit 30.

According to the invention, the light source unit 22 comprises successively, along the longitudinal direction A1 of the light beam LB, a non coherent light generator 32, a coherence increasing device 34, and a beam shaping device 36 distributing the light coming from the coherence increasing device 34 on the rear side 38 of the display 24. The beam shaping device 36 can be made of lenses and/or of diffractive elements so as to spread the light beam LB over the surface of the display 24.

As can be seen more in details on figure 3, the non coherent light generator 32 comprises several light sources constituted by several light emitting diodes 40 (LEDs) mounted on a printed circuit board 42 (PCB), for example as chips on board. These diodes 40 are preferably selected among diodes with a narrow wavelength bandwidth in order to make the coherence increase easier. However, these diodes 40 are diodes simpler and cheaper than laser diodes and emit non coherent light.

According to the first embodiment of the invention, the coherence increasing device 34 comprises a light homogenization device 44 that enables to homogenize the contribution of said several diodes 40. The light homogenization device 44 can be a light guide.

In order to improve the temporal coherence of the light emitted by the diodes 40, an optical band pass filtering layer 46 is arranged between the diodes 40 and the light guide 44. For example a bandwidth of 5 nm or less for the light, after the optical band pass filtering layer 46, provides good results for the head-up display system 16.

More generally, good results for light emitting diodes are obtained when the wavelength variance value after filtering $\Delta\lambda_f$ divided by the wavelength variance value before filtering $\Delta\lambda_s$ is equal or inferior to 0.1. This equation is represented on figure 4 wherein the wavelength value before filtering $\Delta\lambda_s$ as a function of the output light power is shown as a thin line whereas the wavelength value after filtering $\Delta\lambda_f$ is shown as a thick line.

According to an embodiment of the present invention, said optical band pass filtering layer 46 is made of a coating deposited on each diode 40.

The light guide 44 and the coherence increasing device 34 improve the spatial coherence by creating a narrow and low-divergent light beam. Spatial coherence can be chosen so as to obtain a good trade-off between a good image formation via diffraction on the combiner 26 and a relatively low speckle effect.

According to the first embodiment, the coherence increasing device 34 comprises a collimating and beam diameter reduction device 48 which is for example constituted of a series of two Fresnel lenses 50, 52, enabling good condensing efficiency via a low F-number (ratio between lens focal length and lens aperture) or other types of lenses, arranged behind a diaphragm 54 which is facing the rear side, or input face, of the beam shaping device 36. This collimating and beam diameter reduction device 48 enables improvement of the spatial coherence by creating a narrow and low divergent light beam LB. Spatial coherence can be optimized with the collimating and beam diameter reduction device 48 in order to find a good trade-off between a good image formation via diffraction on the combiner 28, and a relatively low speckle effect on the virtual image 18.

The aim of the two Fresnel lenses 50, 52 is to collimate the light beam LB in order to obtain an essentially parallel narrow light beam LB along the optical axis A1.

In order not to increase the packaging of the light source unit 22, while keeping the possibility of obtaining an enough narrow light beam LB adapted to interact with the diffractive combiner 28, the aperture slit 56 of the diaphragm 54 matches the following energetic equation:

$$A_1 \leq \frac{d_{aperture}}{d_{LB}} \leq A_2$$

Wherein d$_{aperture}$ is the diameter of the aperture slit 56, d$_{LB}$ is the diameter of the light beam LB when it impacts the rear side of the diaphragm 54, and the values A1 and A2 depend on the energetic efficiency requirements for the whole system.

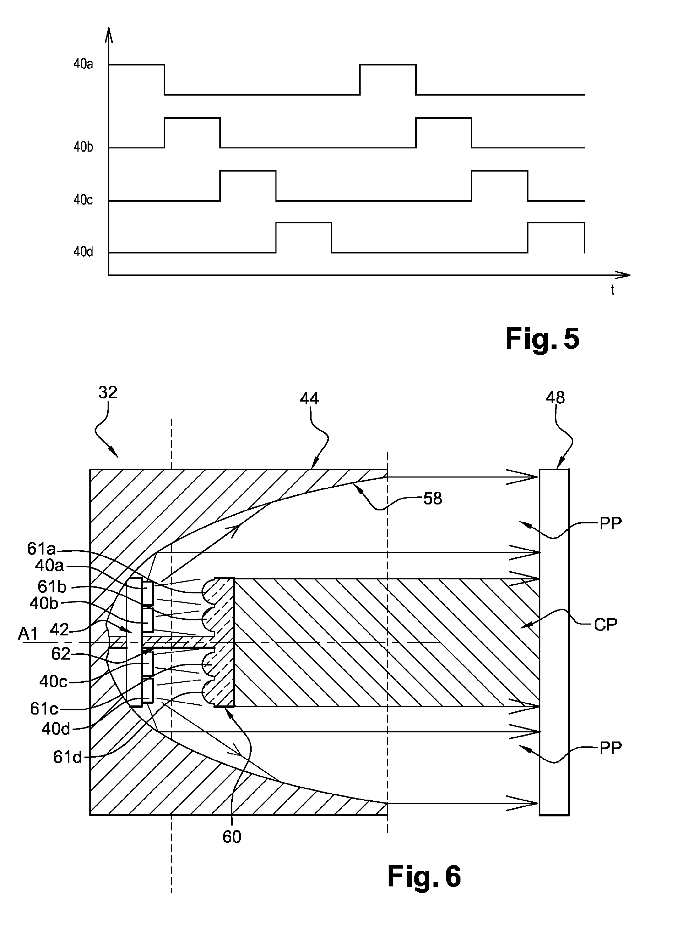

According to a preferred embodiment, the generation of speckle phenomenon in the virtual image is prevented by averaging the luminous power provided by the several diodes 40a, 40b, 40c, 40d by switching on sequentially each diode 40, as shown on figure 5. As can be seen on the figure, the diodes 40 are switched on one after the other and at a frequency higher than the sensitivity of the human eye such that the driver's eye 20 can see the virtual image 18 constantly illuminated, without noticing that some of the diodes 40 are switched off temporarily. Thus, the luminous energy perceived by the driver's eye 20 is substantially the sum of the energy delivered by all diodes 40.

According to alternative embodiments, several diodes 40 could be switched on simultaneously, particularly if the number of diodes is much larger than four.

A second embodiment of the present invention will now be described considering figure 6. Only the distinct features, with regards to the first embodiment, will be described in details.

According to the second embodiment, the light homogenization device 44 comprises a parabolic reflector 58 having an integrated lens array 60 of focal length $f$ at a chosen distance to the focus point, essentially at a distance $f$ near the focus point, of the parabolic reflector 58. The aim of the light homogenization device 44 according to the second embodiment is to collimate the light beam LB in order to obtain a parallel homogenized light beam LB along the optical axis A1.

Preferably, the lens array 60 includes one micro-lens 61 for each diode 40. It could be an integrated device which means that the light generator 32 would include the diodes 40, the filtering layer 46, and the lens array 60.

Thanks to the reflector 58, diodes 40 with wide lighting angle can be used since the light emitted laterally is collected by the reflector 58 to be redirected forward.

The printed circuit board 42 bearing the diodes 40 is arranged in the bottom part of the parabolic reflector 58 and the lens array 60 is mounted on a stick 62 fixed to the reflector 58 such that the micro-lenses face the diodes 40 and such that the lens array 60 contributes to homogenization of the light beam LB. The diodes 40 should be located as near as possible to the focus point of the reflector 58 such that the light beams emitted laterally toward the reflector 58 could be redirected forward essentially parallel to the optical axis A1.

Thus, a central portion CP of the light beam LB generated by the diodes 40 is emitted towards the lens array 60 where it is homogenized and slightly collimated before reaching the collimating and beam diameter reduction device 48. A peripheral portion PP of the light beam LB is emitted towards the parabolic faces of the reflector 58 where they are redirected forwardly, in a parallel to the optical axis A1 before reaching the collimating and beam diameter reduction device 48.

Advantageously, the light homogenization device 44 according to the second embodiment replaces the light guide used in the first embodiment.

## Claims

1. A head-up display system (16) particularly for use in a vehicle (10) comprising a light source unit (22) and a display (24) generating images to be projected in the field of vision of a user through an optical system (26), the optical system (26) including a diffractive combiner (28) incorporating computer generated holograms, wherein the light source unit (22) and the display (24) are driven by an electronic control circuit (30), **characterized in that** the light source unit (22) comprises successively, in the direction of the light beam (LB), a non coherent light generator (32), a coherence increasing device (34), and a beam shaping device (36) distributing the light coming from the coherence increasing device (34) on the rear side (38) of the display (24).

2. A head-up display system (16) according to claim 1, **characterized in that** the coherence increasing device (34) comprises a band pass filtering layer (46).

3. A head-up display system (16) according to claim 1 or 2, **characterized in that** the coherence increasing device (34) comprises a collimating and beam diameter reduction device (48).

4. A head-up display system (16) according to the preceding claim, **characterized in that** the collimating and beam diameter reduction device (48) comprises Fresnel lenses.

5. A head-up display system (16) according to anyone of the preceding claims, **characterized in that** the coherence increasing device (34) comprises a diaphragm (54) which is facing the rear side of the beam shaping device (36).

6. A head-up display system (16) according to anyone of the preceding claims, **characterized in that** the non coherent light generator (32) comprises a plurality of light sources (40) and **in that** the coherence increasing device (34) comprises a light homogenization device (44) that enables to homogenize the contribution of said plurality of light sources (40).

7. A head-up display system (16) according to the preceding claim, **characterized in that** the light homogenization device (44) comprises a parabolic reflector (58).

**8.** A head-up display system (16) according to claim 6 or 7, **characterized in that** the light sources (40) are switched on sequentially by the control circuit (30), at a frequency essentially higher than the sensitivity of the human eye, such that the averaging of the luminous intensity coming from the plurality of light sources (40) prevents the generation of speckle phenomenon in the virtual image (18).

**9.** A head-up display system (16) according to anyone of the preceding claims, **characterized in that** the light sources (40) forming part of the non-coherent light generator (32) are constituted of light emitting diodes (40), each diode (40) emitting non-coherent light.

**10.** A head-up display system (16) according to claim 9 taken in combination with claim 2, **characterized in that** said band pass filtering layer (46) is made of a coating deposited on each diode (40).

**Fig. 1**

**Fig. 2**

Fig. 3

Fig. 4

**Fig. 5**

**Fig. 6**

Europäisches
Patentamt

European
Patent Office

Office européen
des brevets

# EUROPEAN SEARCH REPORT

**Application Number**

EP 09 16 5913

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/254127 A1 (EVANS ALLAN [GB] ET AL) 17 November 2005 (2005-11-17) | 5-10 | INV. G02B27/01 |
| Y | * paragraphs [0002], [0046], [0120], [0121], [0101]; figure 22 * | 1-4 | |
| Y,D | US 2007/279746 A1 (TUPINIER LAURENT [FR] ET AL) 6 December 2007 (2007-12-06) * the whole document * | 1,2 | |
| Y | US 2004/108971 A1 (WALDERN JONATHAN D [US] ET AL) 10 June 2004 (2004-06-10) * paragraph [0203]; figure 42 * | 3,4 | |
| A | WO 2007/138576 A (MIRAGE INNOVATIONS LTD [IL]; KONFORTI NAIM [IL]) 6 December 2007 (2007-12-06) * page 13 - page 14; figures 2a,2b * | 1-10 | |

**TECHNICAL FIELDS SEARCHED (IPC)**

G02B

The present search report has been drawn up for all claims

| Place of search | Date of completion of the search | Examiner |
|---|---|---|
| Munich | 2 October 2009 | Feeney, Orla |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 09 16 5913

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2009

| Patent document cited in search report | | Publication date | Patent family member(s) | | Publication date |
|---|---|---|---|---|---|
| US 2005254127 | A1 | 17-11-2005 | CN 1755420 A | | 05-04-2006 |
| | | | GB 2414127 A | | 16-11-2005 |
| | | | JP 2005326855 A | | 24-11-2005 |
| US 2007279746 | A1 | 06-12-2007 | EP 1862841 A1 | | 05-12-2007 |
| US 2004108971 | A1 | 10-06-2004 | NONE | | |
| WO 2007138576 | A | 06-12-2007 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1862841 A